# EUROPÄISCHE PATENTSCHRIFT

(11) **EP 0 834 339 B1**
(45) Veröffentlichungstag und Bekanntmachung des Hinweises auf die Patenterteilung: **27.08.2003**
(21) Anmeldenummer: 97116566.7
(22) Anmeldetag: 23.09.1997
(51) Int. Cl.: B01D 1/00, B01D 3/42, B01D 5/00, H05B 6/00

(54) **Verfahren und Vorrichtung zum Herstellen hochreiner flüssiger Chemikalien**
Method and apparatus for producing highly purified chemical liquids
Procédé et dispositif pour la production de liquide chimique de haute pureté

(30) Priorität: 23.09.1996 DE 19639022
(43) Veröffentlichungstag der Anmeldung: 08.04.1998
(73) Patentinhaber: Mikrowellen-Systeme MWS GmbH, 7240 Küblis (CH)
(72) Erfinder: Lautenschläger, Werner, 88299 Leutkirch (DE)
(74) Vertreter: Schmidt-Evers, Jürgen, Dipl.-Ing.

(56) Entgegenhaltungen:
- DE-C- 349 009
- DE-C- 370 523
- FR-A- 2 252 860

## Beschreibung

Die Erfindung betrifft ein Verfahren zum Herstellen hochreiner Flüssigkeiten, insbesondere flüssiger Chemikalien, durch Destillation nach dem Oberbegriff von Anspruch 1, sowie eine Vorrichtung zum Durchführen dieses Verfahrens nach dem Oberbegriff von Anspruch 6.

Chemikalien enthalten normalerweise bis zu einem gewissen Grad Verunreinigungen. Um die flüssige Chemikalie von den Verunreinigungen zu trennen, wird sie in der Regel destilliert. Die Destillation umfaßt die Verdampfung der Flüssigkeit und die Kondensation der Dämpfe zum Destillat, das zusammen (einfache Destillation) oder nach Siedebereichen getrennt (fraktionierte Destillation) aufgefangen wird. Die einfache Destillation erreicht keine vollständige Gemengetrennung, sie wird daher nur angewandt, wenn auf hohe Reinheit kein Wert gelegt wird. Die fraktionierte Destillation kommt z.B. bei der Aufbereitung von Erdöl oder der Herstellung von Alkohol zur Anwendung.

Da nach dem Raoultschen Gesetz auch der höher siedende Stoff eine seinem Anteil und Dampfdruck entsprechende Menge in den Dampf des niedriger siedenden Stoffes entsendet, ermöglicht erst eine Vielzahl aufeinanderfolgender Destillationsschritte eine exakte Auftrennung. Ein Verfahren zur Feinsttrennung von Flüssigkeitsgemischen ist die Rektifikation, bei der zwischen Verdampfer und Kühler eine sog. Destillierkolonne zwischengeschaltet wird.

Ein Verfahren und eine Vorrichtung der eingangs angegebenen Arten sind in der DE 349 009 C beschrieben. Bei diesem vorbekannten Verfahren und dieser vorbekannten Vorrichtung wird eine Flüssigkeit in einem Behälter durch ein in einer entsprechenden Entfernung oberhalb des Flüssigkeitsspiegels angeordnetes elektrisches Heizelement erhitzt. Der an der Oberfläche der Flüssigkeit entstehende Dampf wird zu einer Kondensationsvorrichtung geleitet und kondensiert.

Ein dem vorgenannten Stand der Technik ähnliches Verfahren und eine ähnliche Vorrichtung, bei denen oberhalb des Flüssigkeitsspiegels ein Infrarot-Strahler eingesetzt wird, ist in der FR 2 252 860 A beschrieben.

Der Erfindung liegt die Aufgabe zugrunde, ein Verfahren zum Herstellen hochreiner Flüssigkeiten, insbesondere flüssige Chemikalien, sowie eine Vorrichtung zur Durchführung dieses Verfahrens zu verbessern.

Das erfindungsgemäße Verfahren besteht darin, dass die zu verdampfende Flüssigkeit mittels Mikrowellen-Bestrahlung in den obersten Schichten der Flüssigkeit indirekt erhitzt wird, während tiefere Schichten kühler bleiben. Durch diese Maßnahme kann verhindert werden, dass durch Blasenbildung höher siedende Verunreinigungen in den Dampf mitgerissen werden. Bei der entsprechenden Vorrichtung ist die Wärmequelle in Form einer Mikrowellen-Strahlungsquelle oberhalb der zu reinigenden Flüssigkeit angeordnet.

Gemäß der Erfindung wird durch Einbringen von horizontalen Netzen oder perforierten Platten in die Flüssigkeit die Konvektion innerhalb der Flüssigkeit weitgehend unterbunden. Durch diese Maßnahme kann ebenfalls der Effekt vermindert werden, daß Verunreinigungen durch den Wärmetransport innerhalb der Flüssigkeit von unten nach oben mitgerissen werden und in das Destillat gelangen.

Ferner wird der Flüssigkeitspegel im Flüssigkeitsbehälter während des Destillationsverfahrens konstant gehalten, indem der Flüssigkeitsbehälter aus einem Niveausystem gespeist wird. Dazu ist der Flüssigkeitsbehälter mit einem Vorratsbehälter verbunden, aus dem eine Pumpe die zu reinigende Chemikalie in einen Überlaufstutzen pumpt, welcher im oberen Teil mit dem Vorratsbehälter verbunden ist und dessen unteres Ende unten in den Flüssigkeitsbehälter mündet.

Sämtliche Elemente, die mit der Chemikalie im Laufe des Destillationsverfahrens in Kontakt kommen, müssen gegen die verwendete Chemikalie resistent sein. Im Falle von nicht übermäßig aggressiven Chemikalien kann als Material Glas verwendet werden; wenn die zu reinigende Chemikalie zum Beispiel Flußsäure ist, die Glas angreift, kann beispielsweise Polytetrafluorethylen (PTFE) benutzt werden.

Weitere Ausgestaltungen und Weiterbildungen der Erfindung sind Gegenstand der Unteransprüche.

Anhand der Zeichnung wird nun ein Ausführungsbeispiel der Erfindung erklärt. Es zeigen:
- Fig. 1: eine Prinzip-Darstellung eines Ausführungsbeispieles der erfindungsgemäßen Vorrichtung, anhand der auch das erfindungsgemäße Verfahren erklärt werden soll;
- Fig. 2: ein weiteres Ausführungsbeispiel einer erfindungsgemäßen Vorrichtung in vereinfachter Darstellung; und
- Fig. 3: die Vorrichtung aus Fig. 2 ausschnittweise in zwei verschiedenen Ansichten in vereinfachter Darstellung.

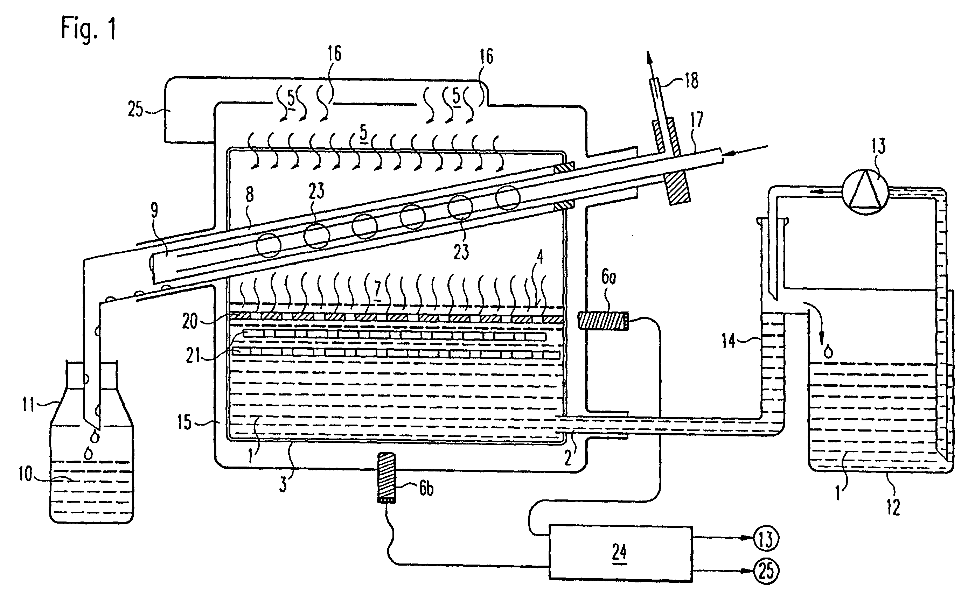

Anhand von Fig. 1 wird im folgenden das erfindungsgemäße Verfahren sowie ein Ausführungsbeispiel einer erfindungsgemäßen Vorrichtung prinzipiell erklärt. Die zu reinigende flüssige Chemikalie 1 wird über einen Zulauf 2 einem Flüssigkeitsbehälter 3 in dessen unterem Bereich zugeführt. Um den Pegel der Flüssigkeitsoberfläche 4 während des Destillationsverfahrens konstant zu halten, wird der Flüssigkeitsbehälter 3 über den Zulauf 2 aus einem Niveausystem gespeist.

Das Niveausystem ist auf der rechten Seite von Fig. 1 dargestellt. Die zu reinigende flüssige Chemikalie 1 befindet sich in einem Vorratsbehälter 12. Von dort wird sie mittels einer Pumpe 13 in einen Überlaufstutzen 14 gepumpt, welcher im oberen Teil mit dem Vorratsbehälter 12 verbunden ist und dessen unteres Ende über den Zulauf 2 in den unteren Bereich des Flüssigkeitsbehälters 3 mündet. Durch das so gebildete Niveausystem wird der Pegel der Flüssigkeitsoberfläche 4 konstant auf dem Niveau des oberen Endes des Überlaufstutzens 14 gehalten.

Der Flüssigkeitsbehälter 3 befindet sich in dem hier erläuterten Ausführungsbeispiel in einem Mikrowellen-Probenraum 15 und muß aus einem mikrowellen-durchlässigen Material bestehen. Die Mikrowellenstrahlung 5 wird von einem Mikrowellengenerator 25 erzeugt und im oberen Bereich des Mikrowellen-Probenraumes 15 über ein oder mehrere Einkopplungsöffnungen 16 eingekoppelt. Zur Erzeugung der Mikrowellenstrahlung 5 und zur Übertragung derselben vom Mikrowellengenerator 25 zu den Einkopplungsöffnungen 16 können allgemein übliche Elemente eingesetzt werden. Da die Mikrowellen-Einstrahlung 5 von oben erfolgt und da die Flüssigkeit 1 die Mikrowellenstrahlung 5 absorbiert, werden die obersten Schichten der Flüssigkeit 1 stark erhitzt während der untere Bereich kühler bleibt.

Anstelle der Mikrowellenstrahlung kann ebenso Infrarotstrahlung zum Erhitzen der Chemikalie 1 verwendet werden. Die Verwendung von Mikrowellenstrahlen 5 hat gegenüber Infrarot jedoch den Vorteil, daß mit ihnen eine indirekte Erwärmung der Flüssigkeit 1 möglich ist, wenn im Bereich der obersten Schichten der Flüssigkeit 1 kurz unterhalb der Oberfläche 4 ein mikrowellen-absorbierendes Material eingebracht wird, wie weiter unten näher erläutert werden wird.

Zur Messung der Temperaturverteilung der Flüssigkeit 1 im Flüssigkeitsbehälter 3 werden wenigstens zwei Temperaturmeßgeräte 6a und 6b verwendet, die vorzugsweise als Infrarot-Thermosensoren ausgebildet sind. Ein erster IR-Thermosensor 6a mißt die Temperatur in den heißeren oberen Flüssigkeitsschichten und ein zweiter IR-Thermosensor 6b mißt die Temperatur im unteren kühleren Bereich der Flüssigkeit 1. Die Thermosensoren 6a, 6b sind mit einer Steuereinheit 24 verbunden, welche ihrerseits mit der Pumpe 13 des Niveausystems und mit der Strahlungsquelle 25 verbunden ist.

Entsprechend dem Meßergebnis der Temperaturverteilung wird zum einen die Zufuhr von kalter zu reinigender Flüssigkeit 1 in den Flüssigkeitsbehälter 3 und zum anderen die Leistung der auf die Oberfläche 4 der Flüssigkeit 1 einfallenden Strahlung 5 gesteuert. Durch Konstanthaltung der Temperatur in den oberen Schichten der Flüssigkeit 1 sowie im unteren Bereich ist es möglich, eine Durchmischung weitgehend zu unterbinden.

Oberhalb der Flüssigkeitsoberfläche 4 ist eine Kondensationsvorrichtung angeordnet. Sie befindet sich noch innerhalb des Probenraumes 15 und besteht aus einem schräg nach unten verlaufenden Führungsrohr 8, in dem eine Vielzahl von Dampfdurchlaßlöchern 23 angebracht ist, durch die der nach oben steigende Dampf 7 in das Führungsrohr 8 eindringen kann. In dem Führungsrohr 8 erstreckt sich konzentrisch ein Kühlfinger 9, in dem wiederum konzentrisch ein Kühlmittel-Zuführungsrohr 17 verläuft, welches einen Abstand zum Kühlfinger 9 aufweist. Das Kühlmittel strömt innen durch das Kühlmittel-Zuführungsrohr 17 ein und tritt am anderen offenen Ende des Kühlmittel-Zuführungsrohres wieder aus, so daß es in dem Zwischenraum zwischen Kühlmittel-Zuführungsrohr 17 und Kühlfinger 9 zurückströmt und letztlich über einen Kühlmittel-Ablauf 18 die Kondensationsvorrichtung wieder verläßt. Als Kühlmittel eignet sich beispielsweise Wasser oder Silikonöl, welches die Mikrowellen kaum absorbiert und nicht direkt erhitzt wird.

Bei entsprechend gesteuerter Leistung der Einstrahlung 5 auf die Oberfläche 4 der Flüssigkeit 1 werden die obersten Schichten so hoch erhitzt, daß die am niedrigsten siedende Komponente aus der Flüssigkeit 1 verdampft. Der nach oben entweichende Dampf 7 dringt durch die Dampfdurchlaßlöcher 23 des Führungsrohres 8 ein und kondensiert an dem gekühlten Kühlfinger 9. Das Kondensat 10 tropft auf die Innenseite des Führungsrohres 8 nieder und fließt entlang dem schräg angeordneten Führungsrohr in einen Auffangbehälter 11.

Sämtliche Elemente, die im Laufe des Destillationsverfahrens mit der Chemikalie in Kontakt kommen, wie zum Beispiel Flüssigkeitsbehälter 3, Kondensationsvorrichtung 8, 9 oder Niveausystem 12, 13, 14, müssen gegen die verwendete Chemikalie resistent sein. Im Falle von nicht übermäßig aggressiven Chemikalien kann als Material Glas verwendet werden; wenn die zu reinigende Chemikalie zum Beispiel Flußsäure ist, die Glas angreift, kann beispielsweise Polytetrafluorethylen (PTFE) benutzt werden.

Als weiteres konstruktives Merkmal der Vorrichtung ist knapp unterhalb des Oberflächenpegels 4 in dem Flüssigkeitsbehälter 3 ein Netz bzw. eine perforierte Platte 20 aus mikrowellen-absorbierendem Material horizontal eingebracht. Diese Platte 20 ermöglicht eine indirekte Erwärmung der obersten Schichten der Flüssigkeit 1 mit Mikrowellen-Strahlung 5. Durch diese Maßnahme wird die Erhitzung der Flüssigkeit 1 noch stärker auf die obersten Schichten im Flüssigkeitsbehälter 3 konzentriert, so daß ein Mitreißen von Blasen höhersiedender Verunreinigungen in der Flüssigkeit 1 noch mehr eingeschränkt wird und eine höhere Reinheit der flüssigen Chemikalie erreicht werden kann.

Unterhalb der mikrowellen-absorbierenden perforierten Platte 20 sind weitere Netze oder perforierte Platten 21 horizontal in dem Flüssigkeitsbehälter 3 eingebracht. Diese Platten 21 sollten vorzugsweise mikrowellen-durchlässig sein, insbesondere dann, wenn sie in tieferen Schichten in der Flüssigkeit 1 angeordnet sind, um eine indirekte Erwärmung dieser tieferen Schichten zu vermeiden. Diese konstruktive Maßnahme erlaubt eine Verminderung der Konvektion, d.h. des Wärmetransportes innerhalb der Flüssigkeit 1. Bei der Konvektion könnten wiederum - wenn sie von unten nach oben erfolgt - Verunreinigungen mitgerissen werden und die mit dem Verfahren erreichbare Reinheit der flüssigen Chemikalie beschränken.

Durch die erfindungsgemäßen Maßnahmen ist ein höherer Reinheitsgrad zu erreichen als bei bisher bekannten Verfahren, da nur die oberste Flüssigkeitsschicht stark erhitzt wird und somit kaum höhersiedende Verunreinigungen durch Blasenbildung in den Dampf 7 mitgerissen werden. Die Reinheit wird zudem durch die Verringerung der Konvektion innerhalb der Flüssigkeit 1 verbessert.

Das oben beschriebene Verfahren eignet sich zur Herstellung hochreiner Flüssigkeiten jeder Art, insbesondere für flüssige Chemikalien wie sie in der Herstellung von Halbleitern benötigt werden. Ein Beispiel für eine solche Chemikalie ist Flußsäure.

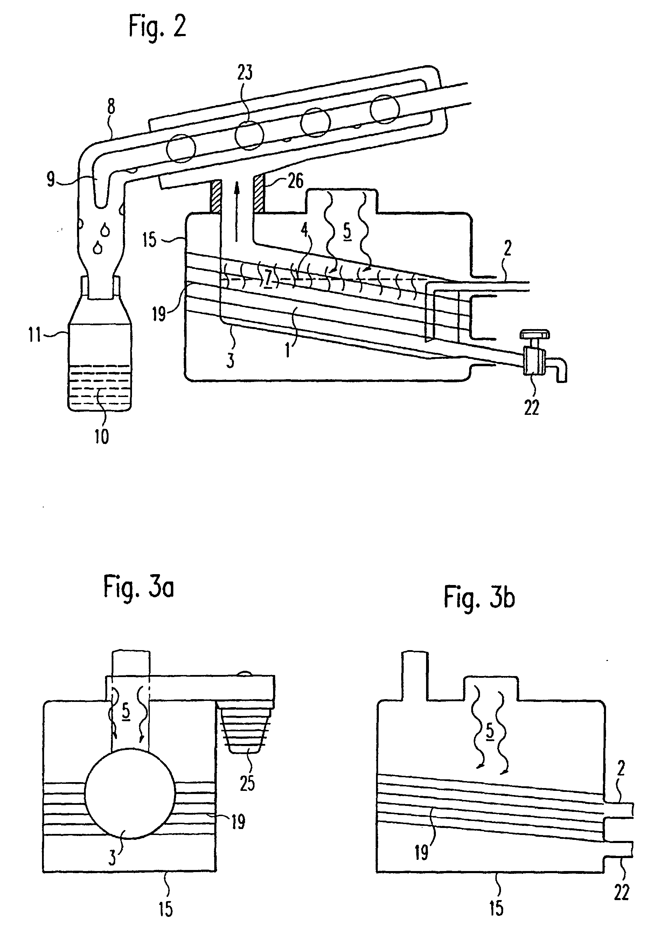

Fig. 2 zeigt nun ein weiteres Ausführungsbeispiel einer erfindungsgemäßen Vorrichtung in vereinfachter Darstellung. Teile, die auch in Fig. 1 gezeigt sind, sind in Fig. 2 mit den gleichen Bezugszeichen gekennzeichnet; ihre Funktion wird nicht nochmals erläutert. Niveausystem, Thermosensoren, Steuereinheit und Mikrowellengenerator sind in dieser Ausführung ebenso vorhanden, auch wenn sie der Einfachheit halber nicht eingezeichnet sind; die Platten bzw. Netze zur Oberflächenerwärmung und zur Konvektionsverminderung werden selbstverständlich auch hier eingesetzt.

In diesem Ausführungsbeispiel ist der Flüssigkeitsbehälter 3 röhrenförmig ausgebildet und ist nicht horizontal, sondern schräg in dem Mikrowellen-Probenraum 15 angeordnet. Im unteren Bereich des Flüssigkeitsbehälters 3 ist zudem eine Abflußvorrichtung 22 angebracht, so daß der Inhalt des Flüssigkeitsbehälters 3 auf einfache Art und Weise entleert werden kann, wozu die Schräglage des Flüssigkeitsbehälters 3 besonders vorteilhaft ist. Die Abflußvorrichtung 22 erlaubt auch ein Ablassen der Flüssigkeit 1 während des Destillationsverfahrens, so daß eine zu hohe Konzentration von Verunreinigungen im Flüssigkeitsbehälter 3 vermieden werden kann.

Die gesamte Kondensationsvorrichtung bestehend aus Führungsrohr 8 und darin angeordneten Kühlfinger 9 ist hier außerhalb des Mikrowellen-Probenraumes 15 angeordnet. Der aufsteigende Dampf 7 gelangt durch eine Röhre 26 im oberen Bereich des Flüssigkeitsbehälters 3 oberhalb der Flüssigkeitsoberfläche 4 zu dem Führungsrohr 8 und tritt dort wiederum durch Dampfdurchlaßlöcher 23 in das Führungsrohr 8 ein um am gekühlten Kühlfinger 9 zu kondensieren und in einen Auffangbehälter 11 abzufließen.

Um zu verhindern, daß die Mikrowellenstrahlung 5 nicht außerhalb des Flüssigkeitsbehälters 3 nach unten und von dort in die unteren Schichten der Flüssigkeit 1 im Flüssigkeitsbehälter 3 eindringen kann, sind zwischen der Innenwand des Mikrowellen-Probenraumes 15 und der Außenwand des Flüssigkeitsbehälters 3 sogenannte Lamellen-Fallen 19 angeordnet. Die Lamellen-Fallen 19 bestehen aus einem mikrowellen-dämpfenden oder -absorbierenden Material und haben vorzugsweise einen gegenseitigen Abstand, der etwa einem Viertel der Wellenlänge der einfallenden Mikrowellenstrahlung 5 entspricht, um dadurch die Absorption der Mikrowellenstrahlung 5 noch zu verstärken.

In Fig. 3 schließlich ist das Ausführungsbeispiel aus Fig. 2 nochmals stark vereinfacht in zwei verschiedenen Ansichten dargestellt, um das System der MikrowellenEinkopplung und der Lamellen-Fallen 19 näher zu erläutern. Dabei zeigt Fig. 3b die gleiche Ansicht wie Fig. 2, und Fig. 3a zeigt die Vorrichtung von Fig. 2 bzw. von Fig. 3b von rechts.

Die von dem Mikrowellengenerator 25 erzeugten Mikrowellen 5 werden von oben in den Mikrowellen-Probenraum 15 eingekoppelt und erhitzen die in dem mikrowellentransparenten Flüssigkeitsbehälter 3 befindliche Flüssigkeit. Die um den Flüssigkeitsbehälter herum in gleicher Orientierung wie dieser angeordneten und parallel zueinander verlaufenden Lamellen-Fallen 19 absorbieren die von oben einfallende Mikrowellenstrahlung 5 zum einen durch ihre mikrowellen-absorbierenden Materialeigenschaften und zum anderen durch ihren gegenseitigen Abstand von einem Viertel der Wellenlänge der Mikrowellen 5. Durch diese Konstruktion dringen die Mikrowellen 5 nicht in den unteren Bereich des Probenraumes 15 ein und können diesen somit nicht erhitzen.

## Patentansprüche

1. Verfahren zum Herstellen hochreiner Flüssigkeiten, insbesondere flüssiger Chemikalien, durch Destillation,
**dadurch gekennzeichnet,**
**dass** ein Netz oder eine perforierte Platte (20) vorgesehen wird, das/die im wesentlichen waagrecht knapp unterhalb der Oberfläche (4) der zu reinigenden Flüssigkeit (1) positioniert wird, und dass durch das Netz beziehungsweise durch die Platte (20) die durch einfallende Mikrowellenstrahlung (5) verursachte Erwärmung der zu reinigenden Flüssigkeit (1) auf die obersten Schichten der Flüssigkeit (1) konzentriert wird.

2. Verfahren nach Anspruch 1,
**dadurch gekennzeichnet,**
**dass** der Pegel der Flüssigkeitsoberfläche (4) während des Verfahrens konstant gehalten wird.

3. Verfahren nach Anspruch 1 oder 2,
**dadurch gekennzeichnet,**
**dass** der durch Erhitzung der obersten Schichten der Flüssigkeit (12) entstehende Dampf (7) oberhalb der Flüssigkeitsoberfläche (4) an einer Kondensationsvorrichtung (8, 9) kondensiert und das Kondensat (10) in einen Auffangbehälter (11) fließt.

4. Verfahren nach einem der Ansprüche 1 bis 3,
**dadurch gekennzeichnet,**
**dass** die Temperaturverteilung in der Flüssigkeit (1) durch wenigstens zwei Temperaturmessgeräte (6a, 6b) von denen wenigstens ein Temperaturmessgerät (6a) die Temperatur in den obersten Schichten der Flüssigkeit (1) und wenigstens ein Temperaturmessgerät (6b) die Temperatur im unteren Bereich der Flüssigkeit (1) misst, zur Steuerung der Leistung der auf die Flüssigkeitsoberfläche (4) einfallenden Strahlung (5) und der Zufuhr von kalter zu reinigender Flüssigkeit (1) in den Flüssigkeitsbehälter (3) überwacht wird.

5. Vorrichtung zur Durchführung des Verfahrens nach einem der Ansprüche 1 bis 4, mit einem Flüssigkeitsbehälter (3), mit einer auf den Flüssigkeitsbehälter einwirkenden Wärmequelle (5) und mit einer mit dem Flüssigkeitsbehälter verbundenen Kondensationsvorrichtung (8, 9),
**dadurch gekennzeichnet,**
**dass** die Wärmequelle (5) eine oberhalb des Raums für die Flüssigkeit angeordnete Mikrowellen-Strahlungsquelle , und dass ein Netz oder eine perforierte Platte (20) im wesentlichen waagrecht in dem Flüssigkeitsbehälter angeordnet ist.

6. Vorrichtung nach Anspruch 5,
**dadurch gekennzeichnet,**
**dass** der Flüssigkeitsbehälter (3) in einem Probenraum (15) angeordnet ist, in den über Einkopplungsöffnungen (16) die von einem Mikrowellengenerator (25) erzeugte Mikrowellenstrahlung (5) eingekoppelt wird.

7. Vorrichtung nach Anspruch 5 oder 6,
**dadurch gekennzeichnet,**
**dass** der Flüssigkeitsbehälter (3) mit einem Niveausystem (12-14) zur Konstanthaltung des Pegels der Flüssigkeitsoberfläche (4) im Flüssigkeitsbehälter (3) verbunden ist.

8. Vorrichtung nach Anspruch 7,
**dadurch gekennzeichnet,**
**dass** das Niveausystem (12-14) aus einem Vorratsbehälter (12) für die zu reinigende Flüssigkeit (1), aus einer Pumpe (13) und aus einem Überlaufstutzen (14) besteht, in den mittels der Pumpe (13) aus dem Vorratsbehälter (12) die Flüssigkeit (1) gepumpt wird, wobei der Überlaufstutzen (14) im oberen Teil mit dem Vorratsbehälter (12) verbunden ist und das untere Ende des Überlaufstutzens (14) in den unteren Bereich des Flüssigkeitsbehälters (3) mündet.

9. Vorrichtung nach einem der Ansprüche 5 bis 8,
**dadurch gekennzeichnet,**
**dass** die Kondensationsvorrichtung (8, 9) oberhalb der Flüssigkeitsoberfläche (4) angeordnet ist.

10. Vorrichtung nach einem der Ansprüche 5 bis 9,
**dadurch gekennzeichnet,**
**dass** die Kondensationsvorrichtung (8, 9) innerhalb oder außerhalb des Mikrowellen-Probenraumes (15) angeordnet ist.

11. Vorrichtung nach einem der Ansprüche 5 bis 10,
**dadurch gekennzeichnet,**
**dass** die Kondensationsvorrichtung (8, 9) aus einem schräg nach unten verlaufenden Führungsrohr (8) mit Dampfdurchlasslöchern (23) und einem sich konzentrisch in dem Führungsrohr (8) erstreckenden Kühlfinger (9) besteht.

12. Vorrichtung nach Anspruch 11,
**dadurch gekennzeichnet,**
**dass** konzentrisch im Kühlfinger (9) ein Kühlmittel-Zuführungsrohr (17) verläuft, welches einen Abstand zum Kühlfinger (9) aufweist und am unteren Ende offen ist, so dass ein Kühlmittel innen durch das Kühlmittel-Zuführungsrohr (17) einströmt, am anderen offenen Ende wieder austritt und in dem Zwischenraum zwischen Kühlmittel-Zuführungsrohr (17) und Kühlfinger (9) zurückströmt, um die Kondensationsvorrichtung letztlich über einen Kühlmittel-Ablauf (18) zu verlassen, oder umgekehrt.

13. Vorrichtung nach Anspruch 12,
**dadurch gekennzeichnet,**
**dass** als Kühlmittel für den Kühlfinger (9) Wasser oder Silikonöl verwendet wird.

14. Vorrichtung nach einem der Ansprüche 10 bis 13,
**dadurch gekennzeichnet,**
**dass** ein im Führungsrohr (8) abfließendes Kondensat (10) in einem Auffangbehälter (11) aufgefangen wird.

15. Vorrichtung nach einem der Ansprüche 5 bis 14,
**dadurch gekennzeichnet,**
**dass** für die Überwachung der Temperaturverteilung in der Flüssigkeit (1) wenigstens zwei Temperaturmessgeräte (6a, 6b) vorhanden sind, von denen wenigstens ein Temperaturmessgerät (6a) die Temperatur in den obersten Schichten der Flüssigkeit (1) und wenigstens ein Temperaturmessgerät (6b) die Temperatur im unteren Bereich der Flüssigkeit (1) misst,
**dass** eine Steuereinheit (24) zur Steuerung der Leistung der auf die Flüssigkeitsoberfläche (4) einfallenden Strahlung (5) und/oder der Zufuhr von kalter zu reinigender Flüssigkeit (1) in den Flüssigkeitsbehälter (3) vorgesehen ist, und
**dass** die Temperaturmessgeräte (6a, 6b) mit der Steuereinheit (24) verbunden sind.

16. Vorrichtung nach Anspruch 15,
**dadurch gekennzeichnet,**
**dass** die Temperaturmessgeräte (6a, 6b) Infrarot-Thermosensoren sind.

17. Vorrichtung nach einem der Ansprüche 5 bis 16,
**dadurch gekennzeichnet,**
**dass** in dem Flüssigkeitsbehälter (3) kurz unterhalb der Flüssigkeitsoberfläche (4) ein Netz oder eine perforierte Platte (20) aus mikrowellen-absorbierendem Material etwa horizontal eingebracht ist, um die obersten Schichten der Flüssigkeit (1) mittels Mikrowellen-Bestrahlung (5) indirekt zur erwärmen.

18. Vorrichtung nach einem der Ansprüche 5 bis 17,
**dadurch gekennzeichnet,**
**dass** in dem Flüssigkeitsbehälter (3) horizontal oder schräg ausgerichtete Netze oder perforierte Platten (22) eingebracht sind, um die Konvektion innerhalb der Flüssigkeit (1) zu vermindern.

19. Vorrichtung nach Anspruch 18,
**dadurch gekennzeichnet,**
**dass** die Netze oder perforierten Platten (22) aus einem mikrowellen-durchlässigen Material bestehen.

20. Vorrichtung nach einem der Ansprüche 5 bis 19,
**dadurch gekennzeichnet,**
**dass** der Flüssigkeitsbehälter (3) von Lamellen-Fallen (19) aus mikrowellen-dämpfenden oder -absorbierenden Material umgeben ist.

21. Vorrichtung nach Anspruch 20
**dadurch gekennzeichnet,**
**dass** die etwa parallel zueinander angeordneten Lamellen-Fallen (19) einen Abstand haben, welcher etwa einem Viertel der Wellenlänge der einfallenden Strahlung (5) entspricht.

22. Vorrichtung nach einem der Ansprüche 5 bis 21,
**dadurch gekennzeichnet,**
**dass** sämtliche Elemente der Vorrichtung die im Laufe des Destillationsverfahrens mit der Flüssigkeit (1) in Kontakt kommen aus einem gegen die verwendete Flüssigkeit resistenten Material bestehen.

## Claims

1. Method for producing high purity liquids, in particular liquid chemicals, by distillation, **characterized in that** a net or a perforated plate (20) is provided, which is positioned substantially horizontally just below the surface (4) of the liquid (1) to be purified and that the liquid (1) to be purified heated by microwave radiation (5) is concentrated on the uppermost layers of the liquid (1) as a result of the net or the plate (20).

2. Method according to claim 1, **characterized in that** the level of the liquid surface (4) is kept constant during the process.

3. Method according to claim 1 or 2, **characterized in that** vapour (7) rising above the liquid surface (4) through heating the uppermost layers of the liquid (12) condenses on a liquid condensing device (8, 9) and the condensate (10) flows into a collecting vessel (11).

4. Method according to any one of claims 1 to 3, **characterized in that** at least two temperature measurement devices (6a, 6b) are provided to monitor the temperature distribution in the liquid (1) of which at least one temperature measurement device (6a) measures the temperature of the uppermost layers of the liquid (1) and at least one temperature measurement device (6b) measures the temperature in the lower region of the liquid, (1) to control the amount of radiation (5) incident on the liquid surface (4) and the supply of cold liquid (1) to be purified into the liquid container (3).

5. Device for implementing the method according to any one of claims 1 to 4, with a liquid container (3), with a heat source (5) affecting the liquid container and with a liquid condensing device (8, 9) connected to the liquid container (8, 9), **characterized in that** the heat source (5) is a microwave radiation generating source arranged above the chamber for the liquid, and that a net or perforated plate (20) is arranged substantially horizontally within the liquid container.

6. Device according to claim 5, **characterized in that** the liquid container (3) is arranged in a sample chamber (15), into which the microwave radiation (5) generated by a microwave generator (25) passes via introduction openings (16).

7. Device according to claim 5 or 6, **characterized in that** the liquid container (3) is connected to a level system (12-14) for maintaining a constant level of the liquid surface (4) in the liquid container (3).

8. Device according to claim 7, **characterized in that** the level system (12-14) consists of a storage vessel (12) for the liquid (1) to be purified, a pump (13) and an overflow pipe (14), into which the liquid (1) is pumped by means of the pump (13) from the storage vessel (12), whereby the overflow pipe (14) is connected in the upper part to the storage vessel (12) and the bottom end of the overflow pipe (14) opens into the lower region of the liquid container (3).

9. Device according to any one of claims 5 to 8, **characterized in that** the liquid condensing device (8, 9) is arranged above the liquid surface (4).

10. Device according to any one of claims 5 to 9, **characterized in that** the liquid condensing device (8, 9) is arranged inside or outside the microwave sample chamber (15).

11. Device according to any one of claims 5 to 10, **characterized in that** the liquid condensing device (8, 9) comprises a guide pipe (8) extending downwardly in an inclined manner, having vapour flow holes (23) and a cooling finger (9) extending concentrically within the guide pipe (8).

12. Device according to claim 11, **characterized in that** a coolant supply pipe (17), which has a spacing from the cooling finger (9) and is open at the bottom end, runs concentrically in the cooling finger (9), so that a coolant flows in internally through the coolant supply pipe (17), flows out again at the other open end and flows back into the intermediate chamber between the coolant supply pipe (17) and the cooling finger (9), in order finally to leave the liquid condensing device via a coolant outlet (18) or vice versa.

13. Device according to claim 12, **characterized in that** water or silicone oil is used as a coolant for the cooling finger (9).

14. Device according to any one of claims 10 to 13, **characterized in that** a condensate (10) flowing off in the guide pipe (8) is collected in a collecting vessel (11).

15. Device according to any one of claims 5 to 14, **characterized in that** at least two temperature measurement devices (6a, 6b) are provided to monitor the temperature distribution in the liquid (1), of which at least one temperature measurement device (6a) measures the temperature in the uppermost layers of the liquid (1) and at least one temperature measurement device (6b) measures the temperature in the lower region of the liquid (1), that a control unit (24) is provided to control the amount of radiation (5) incident on the liquid surface (4) and/or the supply of cold liquid (1) to be purified into the liquid container (3), and that the temperature measurement devices (6a, 6b) are connected to the control unit (24).

16. Device according to claim 15, **characterized in that** the temperature measurement devices (6a, 6b) are infrared thermo-sensors.

17. Device according to any one of claims 5 to 16, **characterized in that** a net or perforated plate (20) of microwave-absorbing material extends approximately horizontally in the liquid container (3) just below the liquid surface (4), in order to indirectly heat the uppermost layers of the liquid (1) by means of microwave radiation (5).

18. Device according to any one of claims 5 to 17, **characterized in that** nets or perforated plates (22) aligned horizontally or in an inclined manner are arranged in the liquid container (3), in order to reduce the convection within the liquid (1).

19. Device according to claim 18, **characterized in that** the nets or perforated plates (22) consist of a microwave-permeable material.

20. Device according to any one of claims 5 to 19, **characterized in that** the liquid container (3) is surrounded by lamellar traps (19) of microwave-damping or absorbing material.

21. Device according to claim 20, **characterized in that** the lamellar traps (19) are arranged approximately parallel to each other and have a spacing, which corresponds approximately to one-quarter of the wavelength of the microwave radiation (5).

22. Device according to any one of claims 5 to 21, **characterized in that** all elements of the device, which come into contact with the liquid (1) in the course of the distillation process consist of a material resistant to the liquid used.

## Revendications

1. Procédé de fabrication de liquides de grande pureté, en particulier de produits chimiques liquides, par distillation, **caractérisé en ce qu'**il est prévu un réseau ou une plaque perforée (20) qui est positionné sensiblement horizontalement juste au-dessous de la surface (4) du liquide à purifier et **en ce que** le chauffage du liquide (1) à purifier, généré par un rayonnement hyperfréquence (5) incident est concentré sur les couches supérieures du liquide (1) par le réseau ou la plaque (20).

2. Procédé selon la revendication 1, **caractérisé en ce que** le niveau de la surface (4) du liquide est maintenu constant pendant le procédé.

3. Procédé selon la revendication 1 ou 2, **caractérisé en ce que** la vapeur (7) générée par le chauffage des couches supérieures du liquide (12) se condense au-dessus de la surface du liquide (4) au niveau d'un dispositif de condensation (8, 9) et le condensat s'écoule dans un conteneur de réception (11).

4. Procédé selon l'une des revendications 1 à 3, **caractérisé en ce que** la distribution de température dans le liquide (1) est contrôlée par au moins deux appareils de mesure de température (6a, 6b), dont au moins un appareil de mesure de température (6a) mesure la température dans les couches supérieures du liquide (1) et au moins un appareil de mesure de température (6b) mesure la température dans la région inférieure du liquide (1), en vue de commander l'intensité du rayonnement (5) incident à la surface (4) du liquide et l'amenée de liquide froid (1) à purifier dans le conteneur de liquide (3).

5. Dispositif de mise en oeuvre du procédé selon l'une des revendications 1 à 4, comportant un conteneur de liquide (3), une source de chaleur (5) agissant sur le conteneur de liquide (8, 9) et un dispositif de condensation relié au conteneur de liquide, **caractérisé en ce que** la source de chaleur (5) est une source de rayonnement hyperfréquence agencée au-dessus du compartiment destiné au liquide, et **en ce qu'**un réseau ou une plaque perforée (20) est disposée sensiblement horizontalement dans le conteneur de liquide.

6. Dispositif selon la revendication 5, **caractérisé en ce que** le conteneur de liquide (3) est disposé dans un compartiment d'échantillon (15) dans lequel le rayonnement hyperfréquence (5), généré par un générateur hyperfréquence (25), est injecté via des ouvertures d'injection (16).

7. Dispositif selon la revendication 5 ou 6, **caractérisé en ce que** le conteneur de liquide (3) est relié à un système de niveau (12 à 14) destiné à maintenir constant le niveau de la surface (4) du liquide dans le conteneur de liquide (3).

8. Dispositif selon la revendication 7, **caractérisé en ce que** le système de niveau (12 à 14) est constitué par un réservoir (12) destiné au liquide à purifier, une pompe (13) et une tubulure de trop-plein (14) permettant de pomper le liquide (1) dans le réservoir (12) au moyen d'une pompe (13), la tubulure de trop-plein (14) étant reliée dans la partie supérieure au réservoir (12) et l'extrémité inférieure de la tubulure de trop-plein (14) débouchant dans la région inférieure du conteneur de liquide (3).

9. Dispositif selon l'une des revendications 5 à 8, **caractérisé en ce que** le dispositif de condensation (8, 9) est disposé au-dessus de la surface (4) du liquide.

10. Dispositif selon l'une des revendications 5 à 9, **caractérisé en ce que** le dispositif de condensation (8, 9) est disposé à l'intérieur ou à l'extérieur du compartiment d'échantillons soumis au rayonnement hyperfréquence.

11. Dispositif selon l'une des revendications 5 à 10, **caractérisé en ce que** le dispositif de condensation (8, 9) est constitué par un tube de guidage (8) s'étendant vers le bas en étant incliné et comportant des trous de passage de vapeur et par un doigt de refroidissement (9) s'étendant concentriquement dans le tube de guidage (8).

12. Dispositif selon la revendication 11, **caractérisé en ce qu'**un tube d'amenée d'agent de refroidissement (17) s'étend concentriquement dans le doigt de refroidissement (9) à distance dudit doigt de refroidissement et est ouvert à l'extrémité inférieure de sorte qu'un agent de refroidissement pénètre à l'intérieur par le tube d'amenée d'agent de refroidissement (17), ressort par l'autre extrémité et retourne dans l'espace intermédiaire formé entre le tube d'amenée d'agent de refroidissement (17) et le doigt de refroidissement (9) pour sortir finalement du dispositif de condensation par une évacuation d'agent de refroidissement (18), ou inversement.

13. Dispositif selon la revendication 12, **caractérisé en ce qu'**il est utilisé comme agent de refroidissement pour le doigt de refroidissement (9) de l'eau ou de l'huile de silicone.

14. Dispositif selon l'une des revendications 10 à 13, **caractérisé en ce qu'**un condensat (10) s'écoulant dans le tube de guidage (8) est reçu dans un conteneur de réception (11).

15. Dispositif selon l'une des revendications 5 à 14, **caractérisé en ce qu'**il est prévu pour le contrôle de la distribution de température dans le liquide (1) au moins deux appareils de mesure de température (6a, 6b) dont au moins un appareil de mesure (6a) mesure la température dans les couches supérieures du liquide (1) et au moins un appareil de mesure de température (6b) mesure la température dans la région inférieure du liquide (1), **en ce qu'**il est prévu une unité de commande (24) pour commander l'intensité du rayonnement (5) incident à la surface (4) du liquide et/ou l'amenée de liquide froid (1) à purifier dans le conteneur de liquide (3), et **en ce que** les appareils de mesure de température (6a, 6b) sont reliés à l'unité de commande (24).

16. Dispositif selon la revendication 15, **caractérisé en ce que** les appareils de mesure de température (6a, 6b) sont des capteurs de température infrarouge.

17. Dispositif selon l'une des revendications 5 à 16, **caractérisé en ce qu'**un réseau ou une plaque perforée (20), en matériau absorbant les ondes hyperfréquences, est introduit sensiblement horizontalement dans le conteneur de liquide (3) juste au-dessous de la surface (4) du liquide en vue de chauffer indirectement les couches supérieures du liquide (1) au moyen d'un rayonnement hyperfréquence (5).

18. Dispositif selon l'une des revendications 5 à 17, **caractérisé en ce que** des réseaux ou des plaques perforées (22) orientés horizontalement ou de façon inclinée sont introduits dans le conteneur de liquide (3) en vue de réduire la convection à l'intérieur du liquide (1).

19. Dispositif selon la revendication 18, **caractérisé en ce que** les réseaux ou les plaques perforées (22) sont en un matériau transparent vis-à-vis des ondes hyperfréquences.

20. Dispositif selon l'une des revendications 5 à 19, **caractérisé en ce que** le conteneur de liquide (3) est entouré de lamelles inclinées (19) en matériau absorbant ou amortissant les ondes hyperfréquences.

21. Dispositif selon la revendication 20, **caractérisé en ce que** les lamelles inclinées (19) sont agencées sensiblement parallèlement les unes aux autres à une distance qui correspond sensiblement à un quart de la longueur d'onde du rayonnement incident (5).

22. Dispositif selon l'une des revendications 5 à 21, **caractérisé en ce que** tous les éléments du dispositif, qui viennent en contact avec le liquide (1) au cours du procédé de distillation, sont en un matériau résistant au liquide utilisé.
